# FASCICULE DE BREVET EUROPEEN

(11) **EP 0 670 567 B1**
(45) Date de publication et mention de la délivrance du brevet: **22.04.1998**
(21) Numéro de dépôt: 94402910.7
(22) Date de dépôt: 16.12.1994
(51) Int. Cl.: G09F 3/20, H02G 3/02, H01R 9/26

(54) **Dispositif de marquage pour profilés supports de dispositifs divers**
Profilträger für verschiedene Geräte und Markierungsvorrichtung dafür
Marking device for formed supports for a variety of objects

(30) Priorité: 12.01.1994 FR 9400278
(43) Date de publication de la demande: 06.09.1995
(73) Titulaire: LUDWIG SCHMITT GMBH Société dite :, D-66131 Ensheim (DE)
(72) Inventeur: Steinbach, Horst, D-66131 Ensheim (DE)
(74) Mandataire: Lerner, François

(56) Documents cités:
- EP-A- 0 493 164
- DE-U- 9 213 118

## Description

L'invention a pour objet un dispositif de marquage de profilés permettant l'identification des dispositifs supportés par ces profilés.

Un problème important est celui du marquage des profilés permettant une identification immédiate des dispositifs qu'ils supportent.

Sans une telle identification, les problèmes de maintenance deviennent rapidement insolubles dès lors que plusieurs profilés s'enchevêtrent ou se croisent.

L'invention a pour objet de résoudre ce problème par la prévision d'un dispositif de marquage efficace et d'utilisation très simple.

Un tel dispositif est déjà connu, notamment du brevet FR-A- 2 670 957 ou EP-A- 0 493 164, déposé par le même demandeur, dispositif trouvant son application dans le cas de goulottes à faces latérales poinçonnées pour le logement de câbles ; ce dispositif comporte une pièce qui supporte une plaque support d'étiquetage.

L'objet de l'invention est de permettre un principe de marquage similaire mais cette fois dans le cas de profilés de type classique et normalisé, présentant une section générale en U sans poinçonnage, avec à leur extrémité ouverte des rebords ou ailes dirigés vers l'extérieur sensiblement parallèlement au plan de fond du profilé.

A cet effet, le dispositif conforme à l'invention se caractérise en ce qu'il comporte :
- une première pièce susceptible de venir chevaucher le profilé en présentant au moins deux pattes latérales qui viennent se verrouiller élastiquement sous lesdites ailes du profilé quand cette première pièce est en place,
- une deuxième pièce de forme profilée allongée qui, en position d'utilisation, est verrouillée par ladite première pièce sur les ailes dudit profilé sur lesquelles ladite deuxième pièce vient s'appuyer transversalement, et
- ladite première pièce comporte au moins une gorge de guidage de la deuxième pièce qui s'y engage par sa partie profilée allongée.

Selon une réalisation préférée, ladite seconde pièce a une forme rectangulaire, annulaire, aplatie, allongée, évidée en son centre, ladite première pièce en position d'assemblage et d'utilisation du dispositif ayant sesdites pattes de verrouillage engagées dans l'ouverture de l'anneau.

D'autres caractéristiques, objets et avantages de l'invention apparaîtront plus clairement à l'aide de la description qui va suivre faite en référence aux dessins annexés montrant uniquement à titre d'exemple une réalisation. Dans ces dessins :

La figure 1 montre en vue perspective un dispositif conforme à l'invention en place sur un profilé que le dispositif équipe.

La figure 2 montre en coupe dans le plan II-II de la figure 1 la première et seconde pièces verrouillées sur le profilé.

La figure 3 est une vue en coupe faite dans le plan III-III de la figure 1.

La figure 4 montre à plus petite échelle l'ensemble des trois pièces constituant le dispositif de l'invention obtenu par moulage en une seule pièce.

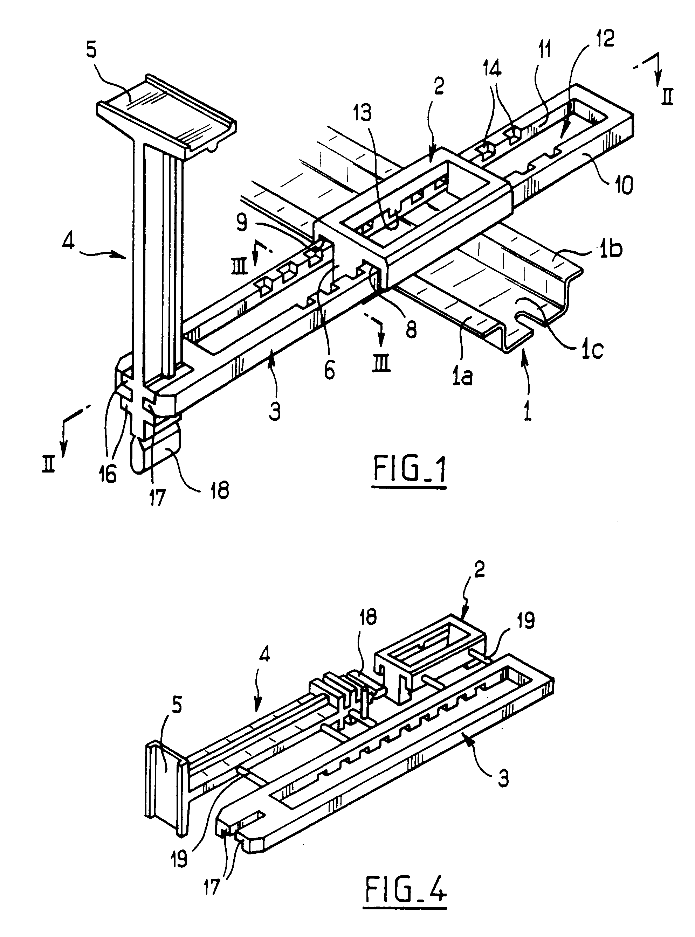

En se reportant aux dessins et en faisant tout d'abord référence aux figures 1, 2 et 3, on aperçoit un profilé 1 ayant de façon générale la forme d'une gouttière en U assez plate avec à ses extrémités ouvertes des rebords ou ailes 1a, 1b dirigés vers l'extérieur sensiblement parallèlement au plan de fond 1c du profilé.

Sur ce profilé, sur lequel peuvent avoir été fixés un ou plusieurs dispositif(s) (non représenté(s)), on a fixé et verrouillé en position d'utilisation un dispositif de marquage conforme à l'invention.

Ce dispositif de marquage est constitué essentiellement d'une première pièce, référencée dans son ensemble 2 formant curseur, qui va être verrouillée sur le profilé 1 comme il sera expliqué plus loin, une seconde pièce 3 en forme de barreau annulaire allongé, aplati, verrouillé sur le profilé 1 et sous le curseur 2 et d'une troisième pièce 4 dirigée orthogonalement par rapport à la pièce 3 et qui porte à une extrémité une plaque support d'étiquetage 5.

Comme on le comprend à l'examen des figures, la première pièce formant curseur est susceptible de venir chevaucher le profilé 1 en se verrouillant sur lui, grâce à deux pattes latérales 6, 7, comportant des crochets qui viennent se verrouiller élastiquement sous les ailes 1a, 1b du profilé lorsque la pièce 2 formant curseur est mise en place sur le profilé par simple pression.

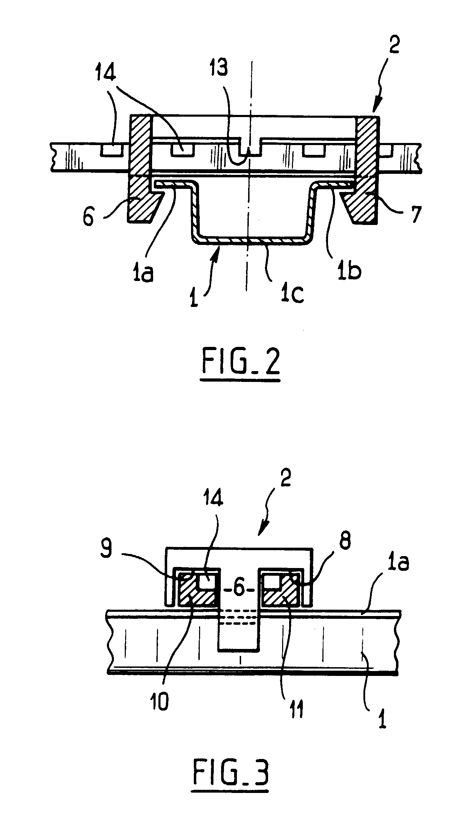

Comme on le voit plus clairement aux figures 1 et 3, la première pièce 2 permet de verrouiller sous elle, dans des gorges de guidage 8, 9 formées de part et d'autre des pattes 6 et 7, les deux barres 10, 11 formant les deux côtés allongés de la seconde pièce 3 en forme de barreau rectangulaire, annulaire, allongé, évidé en son centre.

On voit également aux dessins que dans l'évidement 12 de la seconde pièce 3, se déplacent les deux pattes 6 et 7 de verrouillage de la pièce 2.

D'autre part, en se référant aux figures, on voit que l'on a prévu sur la première pièce 2, au moins un cran tel que référencé 13 qui pourra être reçu dans l'une quelconque des encoches 14 formées de distance en distance sur les barres 10, 11 de la pièce 3.

De cette façon, en engageant un cran tel que 13 de la première pièce 2 dans l'une quelconque des encoches 14 de la seconde pièce 3, on verrouille ces deux pièces en translation, c'est-à-dire, on interdit tout mouvement de coulissement de la pièce 3 parallèlement à sa direction d'allongement lorsqu'elle est en place verrouillée sur le profilé 1 par la pièce 2 dont les pattes élastiques 6, 7 se sont verrouillées sous les rebords 1a, 1b.

Bien entendu, la position des encoches 14 et des crans 13 pourrait être inversée par rapport à la solution illustrée, au moins une encoche pouvant être prévue sur la première pièce 2 pour recevoir un quelconque des crans prévu sur les barres 10, 11 de la seconde pièce 3.

En ce qui concerne la troisième pièce 4 qui porte la plaque support d'étiquetage 5, on voit que dans l'exemple illustré, cette pièce 4 est conformée à son extrémité opposée à celle qui porte la plaque 5, avec une section en forme de Croix de Lorraine, ménageant entre les ailes 16 de la croix, de chaque côté de la pièce 4, deux espaces formant mortaises dans lesquels pourront être engagées des parties 17 formant tenons ménagés aux extrémités correspondantes de la seconde pièce 3 en forme de barreau.

A la figure 1, on a illustré la pièce 4 encore équipée de l'extrémité 18 qui est destinée à être rompue après mise en place du dispositif si le profilé est de profondeur réduite, ou au contraire conservé si le profilé est plus profond et qui avait été formée au moment du moulage de l'ensemble du dispositif.

En se référant à la figure 4, on voit l'ensemble du dispositif obtenu de moulage en une seule pièce, les trois pièces principales 2, 3, 4 constitutives du dispositif étant moulées d'un seul tenant dans le plan de leur moindre épaisseur et étant reliées entre elles par des ponts de rupture tels que 18, 19 permettant leur désolidarisation juste avant utilisation.

On notera que, grâce au dispositif de l'invention, des profilés non poinçonnés, à condition qu'ils comportent des ailes dépassantes 1a, 1b peuvent recevoir le dispositif de marquage de l'invention qui s'applique de façon très simple et qui permet, par le choix des crans et encoches 13, 14 coopérants choisis, de déplacer la plaque 5 support d'étiquetage plus ou moins loin du profilé selon ce qui est désiré.

La mise en place se fait de façon très simple : Après avoir séparé les trois pièces 2, 3 et 4 qui constituent le dispositif, il suffit de présenter sur le profilé 1 la seconde pièce 3 dans la position préférentielle choisie, puis d'appliquer par dessus, par simple pression, la première pièce 2 qui verrouille à la fois les deux pièces sur le profilé, le cran 13 ayant été engagé en face d'une encoche 14 amenée sensiblement au milieu du profilé, après quoi, il suffit de mettre en place la pièce 4 à l'extrémité correspondante comportant les tenons 17 de la pièce 3 ; enfin, la partie 18 peut être rompue et la plaque support 5 équipée de son étiquette de marquage.

L'invention trouve notamment application dans la fixation d'automates sur profilés normalisés, permettant d'un seul coup d'oeil l'identification des automates par exemple logés dans des armoires.

## Revendications

1. Dispositif de marquage pour profilés pour l'identification de dispositifs que ces profilés (1) supportent, le dispositif étant du type comportant une pièce (4) supportant une plaque support d'étiquetage (5), lesdits profilés étant du type comportant une section générale en U avec à leur extrémité ouverte des rebords ou ailes (la, 1b) dirigés vers l'extérieur sensiblement parallèlement au plan de fond du profilé, ledit dispositif étant caractérisé en ce qu'il comprend :
- une première pièce (2) susceptible de venir chevaucher le profilé (1) en présentant au moins deux pattes latérales (6, 7) qui viennent se verrouiller élastiquement sous lesdites ailes (la, 1b) du profilé, quand cette première pièce est en place,
- une deuxième pièce (3) de forme profilée, allongée qui, en position d'utilisation, est verrouillée par ladite première pièce (2) sur les ailes (la, 1b) du profilé (1) sur lesquelles, ladite deuxième pièce vient s'appuyer transversalement,
- ladite première pièce (2) comportant au moins une gorge de guidage (8, 9) de la deuxième pièce (3) qui s'y engage par sa partie profilée allongée.

2. Dispositif selon la revendication 1,
caractérisé en ce que ladite seconde pièce (3) a une forme rectangulaire, annulaire, aplatie, allongée, évidée en son centre, ladite première pièce, en position d'assemblage et d'utilisation du dispositif ayant sesdites pattes de verrouillage (6, 7) engagées dans l'ouverture (12) de l'anneau.

3. Dispositif selon la revendication 1 ou la revendication 2, caractérisé en ce que lesdites première et seconde pièces (2, 3) comportent au moins un cran (13) et une encoche (14) qui coopèrent en position d'utilisation du dispositif pour verrouiller les deux pièces ensemble.

4. Dispositif selon la revendication 3,
caractérisé en ce que ladite seconde pièce (3) comporte plusieurs crans ou encoches (14) répartis selon sa longueur.

5. Dispositif selon l'une des revendications 2 à 4, caractérisé en ce que ladite première pièce (2) comporte deux gorges de guidage précitées (8, 9) qui reçoivent chacune une barre (10, 11) formant chaque côté allongé de ladite deuxième pièce annulaire (3), lesdites barres (10, 11) étant ainsi verrouillées par dessus les ailes du profilé entre lesdites pattes de verrouillage (6, 7) et lesdites gorges (8, 9).

6. Dispositif selon l'une des revendications précédentes, caractérisé en ce que la pièce (4) qui supporte une plaque support d'étiquetage (5) est solidaire de l'une des extrémités de ladite deuxième pièce (3).

7. Dispositif selon la revendication 6,
caractérisé en ce que lesdites pièces (3, 4) comportent des moyens complémentaires de verrouillage (16, 17) pour leur solidarisation en position d'utilisation.

8. Dispositif selon la revendication 7,
caractérisé en ce que lesdits moyens complémentaires de verrouillage sont du type tenons et mortaises ou analogue.

9. Dispositif selon l'une quelconque des revendications 6 à 8, caractérisé en ce que ladite pièce (4) support d'étiquetage vient se verrouiller en position orthogonale avec ladite deuxième pièce (3).

10. Dispositif selon l'une quelconque des revendications précédentes caractérisé en ce que toutes les pièces (2, 3, 4) qui constituent le dispositif entier sont moulées en matière plastique d'un seul tenant dans le plan de leur moindre épaisseur et sont reliées entre elles par des ponts de rupture (18, 19) permettant leur désolidarisation juste avant utilisation.

## Patentansprüche

1. Markierungsvorrichtung für Profilträger zur Identifikation der Vorrichtungen, die diese Profilträger (1) tragen, wobei die Vorrichtung von der Art ist, die aus einem Teil (4) besteht, das einen Etikettenhalter (5) trägt, wobei die Profilträger von der Art sind, die im wesentlichen einen U-förmigen Querschnitt aufweisen und an ihren Enden umgebogene Ränder oder Flügel (la, 1b) besitzen, die nach außen gerichtet und im wesentlichen parallel zu dem ebenen Boden des Profilträgers ausgerichtet sind, wobei die Vorrichtung dadurch gekennzeichnet ist, daß sie besteht aus:
- einem ersten Teil (2) das auf den Profilträger (1) aufgesteckt werden kann, indem es wenigstens zwei seitliche Krallen (6, 7) besitzt, die elastisch um die Flügel (1a, 1b) des Profilträgers schnappen, wenn dieses erste Teil an seinem Platz ist;
- einem zweiten Teil (3) mit einer länglichen profilierten Form, die in Gebrauchsposition durch das erste Teil (2) auf die Flügel (la, 1b) geklemmt ist, auf den das zweite Teil quer angeordnet ist;
- wobei das erste Teil (2) wenigstens einen Führungsschlitz (8, 9) für das zweite Teil (3) aufweist, das darin mit seinem länglichen profilierten Teil aufgenommen ist.

2. Vorrichtung nach Anspruch 1, dadurch gekennzeichnet daß das zweite Teil (3) eine rechteckige, ringförmige, flache, längliche Form besitzt, die in ihrer Mitte ausgenommen ist, wobei das erste Teil im zusammengebauten Benutzungszustand der Vorrichtung mit seinen Rastkrallen (6, 7) in die Öffnung (12) des Ringes greift.

3. Vorrichtung nach Anspruch 1 oder 2, dadurch gekennzeichnet das das erste und das zweite Teil (2, 3) wenigstens einen Vorsprung (13) und eine Ausnehmung (14) aufweisen, die in B Gebrauchsstellung der Vorrichtung zusammenwirken um die beiden Teile miteinander zu verriegeln.

4. Vorrichtung nach Anspruch 3, dadurch gekennzeichnet, daß das zweite Teil (3) entlang seiner Längsausrichtung mehrere Vorsprünge oder Ausnehmungen (14) aufweist.

5. Vorrichtung nach einem der Ansprüche 2 bis 4, dadurch gekennzeichnet, daß das erste Teil (2) zwei der vorgenannten Führungsschlitze (8, 9) aufweist, von denen beide eine Leiste (10, 11) aufnehmen, die die länglichen Seiten des ringförmigen zweiten Teils (3) bilden, wobei die Leisten (10, 11) so zwischen den Rastkrallen (6, 7) und den Schlitzen (8, 9) auf die Flügel des Profilträgers geklemmt sind.

6. Vorrichtung nach einem der vorhergehenden Ansprüche, dadurch gekennzeichnet, daß das Teil (4), das einen Etikettenhalter (5) trägt mit einem Ende des zweiten Teils (3) verbunden ist.

7. Vorrichtung nach Anspruch 6, dadurch gekennzeichnet, daß die Teile (3, 4) ergänzende Verriegelungsmittel (16, 17) besitzt, um sie in Gebrauchsstellung zu verbinden.

8. Vorrichtung nach Anspruch 7, dadurch gekennzeichnet, daß die ergänzenden Verriegelungsmittel Zapfen und Ausnehmungen oder dergleichen sind.

9. Vorrichtung nach einem der Ansprüche 6 bis 8, dadurch gekennzeichnet, daß das Teil (4), das den Etikettenhalter trägt sich senkrecht zu dem zweiten Teil (3) verriegelt.

10. Vorrichtung nach einem der vorhergehenden Ansprüche, dadurch gekennzeichnet, daß alle Teile (2, 3, 4) die die gesamte Vorrichtung bilden in einem Stück in der Ausrichtung ihrer geringsten Stärke aus einem Kunststoffmaterial gespritzt sind und untereinander durch Sollbruchbrücken (18, 19) verbunden sind, die das Vereinzeln unmittelbar vor der Benutzung erlauben.

## Claims

1. Marking device for sections for the identification of devices which those sections (1) support, the device being of the type comprising a member (4) supporting a labelling support plate (5), the sections being of the type comprising a general U-shaped cross-section with, at their open end, flanges or wings (1a, 1b) directed outwards substantially parallel to the base plane of the section, the device being characterised in that it comprises:
- a first member (2) capable of straddling the section (1), having at least two side limbs (6, 7) which lock resiliently under the wings (1a, 1b) of the section, when the first member is in place,
- a second member (3) of elongate, profiled form which, in the use position, is locked by the first member (2) onto the wings (1a, 1b) of the section (1), on which wings the second member is supported transversely,
- the first member (2) comprising at least one guide groove (8, 9) for the second member (3) which engages therein With its elongate profiled portion.

2. Device according to Claim 1,
characterised in that the second member (3) has a form which is rectangular, annular, flat, elongate, cut away at its centre, the first member, in the assembled and use position of the device, having its locking limbs (6, 7) engaged in the opening (12) of the annulus.

3. Device according to Claim 1 or Claim 2, characterised in that the first and second members (2, 3) comprise at least one tooth (13) and at least one notch (14) which cooperate in the use position of the device in order to lock the two members together.

4. Device according to Claim 3,
characterised in that the second member (3) comprises several teeth or notches (14) distributed over its length.

5. Device according to any one of Clams 2 to 4, characterised in that the first member (2) comprises two above-mentioned guide grooves (8, 9), each of which receives a bar (10, 11) forming each elongate side of the second annular member (3), the bars (10, 11) thus being locked over the wings of the section between the locking limbs (6, 7) and the grooves (8, 9).

6. Device according to any one of the preceding Claims, characterised in that the member (4) which supports a labelling support plate (5) is fixedly joined to one of the ends of the second member (3).

7. Device according to Claim 6,
characterised in that the members (3, 4) comprise complementary locking means (16, 17) enabling them to be fixedly joined in the use position.

8. Device according to Claim 7,
characterised in that the complementary locking means are of the tenon and mortise type or the like.

9. Device according to any one of Claims 6 to 8, characterised in that the labelling support member (4) is locked in position perpendicularly to the second member (3).

10. Device according to any one of the preceding Claims, characterised in that all the members (2, 3, 4) constituting the complete device are moulded from plastics material in one piece in the plane of their least thickness and are connected to one another by breaking bridges (18, 19) enabling them to be separated immediately prior to use.
